# DEMANDE DE BREVET EUROPEEN

(11) **EP 0 540 456 A1**
(43) Date de publication de la demande: **05.05.1993**
(21) Numéro de dépôt: 92500138.0
(22) Date de dépôt: 27.10.1992
(51) Int. Cl.: B60R 25/10

(54) **Dispositif d'alarme pour véhicules automobiles et motocycletes**

(71) Demandeur: COMET ELECTRONICA, S.A., E-46930 Quart de Poblet (Valencia) (ES)
(72) Inventeur: Jimenez Alcover, Juan José, E-46136 Museros (Valencia) (ES); Hernandez Sanchez, Leonardo, E-46025 Valencia (ES)
(74) Mandataire: Maldona do Jordan, Julia

(57) **Abrégé**

Dispositif d'alarme pour vehicules automobiles et motocyclettes le quel se trouve contitué par une série de composants electroniques-convetionnels, disposant d'un dispositif pour l'entrée de variables et sortie de fonctions (6), comptant sur un maquoir de consommation de couraute notable (7) et un dispositif de protection par contact (8), disposant d'un element de protection volumetrique par ultra-sons (9) et d'un relais (10) pour coupure de l'allumage, ayant un led de presence en surveillance (11) avec une serie d'elements additionnels que configurent une surveillance totale du véhicule, dans lequel il s'installe.

## Description

### OBJET DE L'INVENTION

La présente memore descriptive est relative à un brevet d'invention relatif à un dispositif d'alarme pour véhicules automobiles et motocyclettes, dont le fonctionnement se base sur l'utilization d'un microproceseur pouvant travailler avec in code biraire,et ayant la possibilite incorporer un synthétiseur de voix,tout comme que disposer d'une ampoule de mercure qui fonctionnera comme interrupteur ou senseur et étant couvert tout l'ensemble d'une resine par immersion de telle façon quill reste completement isolant à l'humidité.

### CHAMP DE L'INVENTION

Cette invention a son application dans l'industric dedicé à la fabrication d'alarmes pour véhicules, moyennant l'utilization de microprocesseurs.

### ANTECEDENTS DE L'INVENTION

Il est connu l'existence d'alarmes avec un montage conventionnel qui sont employées pour être incorporées en véhicules automobiles, lesquelles se trouvent constituées comme une alarme propement dite dotées de prestations moyennes qui ont dans leurs contextes 300 composants (plus ou moins) entre composants actifs et passifs, réalisant la soudure d'eux-memes d'une façons comletement manuelle.

A la vue de cela antérieurement spécifié, on a produit un haut niveau d'alarmes ou produits finalisés qui ont des defauts dans leur frabication et par suite ils sont dotés de pannes que se decantent à court ou moyen terme.

On a aussi connaissance d'une alarme avec un montage superficiel, étant obtenue consequentement de sa propre idyosincrasie, la fabrication d'une alarme dehaite qualité, mais qui sans aucun doute comporte quelques problemes les quels se apparaissent plus tard tels que la reparation puisque il n'existe pas de gran de vanté de composants.

D'ailleurs, sa mise en marche necessite une forte inversion économique, à cause du coût eleve de la machinerie à employer, mais en marge du coût eleve , comme consequence, la main d'oeure qui doit être employée dains le process de production est minime.

Le résultat est un produit d'un prix asserhaut qui a peu de ventes sur le marché national.

La solution evidente à ce probleme estqu' doit compte sur un produit qui est doté, comme base de production, d'un microprocesseur, composant basigue dans la demiere génération des equipes électroniques, qui est supplementé par l'addition d'un montage conventionnel à traves d'une machine de souder typpe vagne.

### DESCRIPTION DE L'INVENTION

Le dispositif d'alarme pour véhicules automobiles et motocyclettes que l'invention propose, obtient par lui -même une solution evidente à la problematique existente actuvellement en cette matiere, obtenant d'un coté la reduction de nombre des composants a in 80% des systemes employés jusqu'a present, et reduisant la dimension des alarmes en les faisant plus commerciales et augmentant leurs prestations, a lors que d'autre coté, la production est augmentée, et ce pour cela que influe sur le prix du montant de la vente totale.

Sans aucune doute le résultat de l'explication au anterieure est l'obtention d'une façon definitive d'une alarme qui se troure capacitée tecnologiquement dans la ligne plus avancée et que dispose d'une serie de conditions totalement superieures à n'importe quelles des existentes au marché, comptant en marge de tout le context sur un prix inferieur.

D une façon plus concrete, le dispositif d'alarme pour véhicules automobiles et motocyclettes qui on préconise, est constitué à partir d'un element qui consiste en une alarme pour véhicules automobiles et motocyclettes, laquelle est compusé par microprocesseurs, circuits integrés, une serie de transistors appropries, diodes, relés. etc...

Ce dispositif a une entrée pour variables et une sortie de fonctions, est compte sur un element que réglera la consommation de courant, protection par contact , protection volimétrigne, c 'est dire ultra-sons, coupe d'allumage par relé et un led de presence en surveillance.

Au même temps ce dispositif est capacité pour regler la sorie, parce-quil dispose de la possibilité de permetre l'eclair d'intermittents pendant le decochement, c'est à dire pendant 30 seconds completement reciclables.

Se dispositif d'alarme objet de l'invention regle le systeme de femeture des portes, blocage d'alarme pendant le fonctionnement du moteur, comptant sur un telécommande et un systeme autivandaligne, ayant en même temps la possibilité de réaliser une detection des portes et certainement du coffre.

Ce dispositif d'alarme est capacite pour regler les modules leve-vitres ayant une memorisation d'alarme dicochée, sortie pour activer cherche-personnes ou appel télephonique, ainsi qu'un module de cristal liquide, avec auto-chèque de l'alarme et installation de velle-a et reglant le dicoche de l'alarme de façon limitée troistois, en acord avec la normative de la CEE.

L'alarme dispose d'un visualisateur et un clavier qui se connectent directement avec le module principal à partir diquel on pout realiser les differentes variations et modifications sur le context de la propre alarme visualisant les differentes répresentaions gráfiques sur l'ecran.

Le dispositif travaille en code binaire et c'est pour cela quil pourra être programmé dans la langue de chaque pays ou l'on instale le propre dispositif c'est à dire il a un caractère multibilingue.

Ce dispositif pourra aussi incorporer un synthetiseur de voix, pour pouvoir donner des ordres verbalement.

Finalement la dispositif emplouera une ampoule de mercure qui fonctionnera comme un interrupteur ou senseur, étant tout l'ensemble de l'alarme recouvert avec une resine par immersion qui constituera un isolant antihumidité.

### DESCRIPTION DES DESSINS

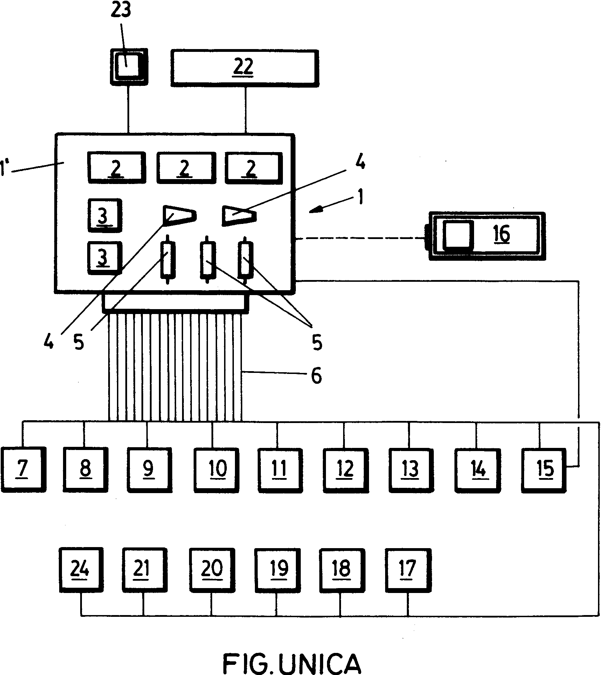

Pour completer la description qu'on est entrain de réaliser et avec l'objet d'aider à une meilleure comprehension des caracteristiques de l'invention, on ajoute à la presente memoire descriptive, comme parte intégrante de la meme, une feuille dusplans sur laquelle avec caractère illustratif et pas limitatif le suivant a eté representé:
La seule figure montrée, represente un diagramme de blocs correspondants au context du dispositif d'alarme pour véhicules automobiles et motocyclettes.

### REALISATION PREFERABLE DE L'INVENTION

A uue de la figura unique, on peut observer comment le dispositif d'alarme pour véhicules automobiles et motocyclettes (1) que l'invention propose est composé par microprocesseurs (2), une serie de circuits integrés (1), plussieurs transisters (3), qui entrent en colaboration armonique avec diodes (4), relés (5), etc, etc.

Se dispositif d'alarme (1), est d'une entrée de variables et sortie de fonctions (6), comptant sur une consommation de courant notable (7), protection par contact (8), et protection volumetrique (9) concrètement une protection volumetrique par ultr-son.

Se dispositif d'alarme (1) a un coupure d'allumage de relé (10) inled de presence en surveillance (11), une sortie de commande fixe en surveillance (12), et certainement un éclair d'intermittens pendant le décochement (13), calibré en principe en 30 secondes é tant capacité pour être varié adiquatement d'accord avec les necessites de l'usager.

Se dispositif d'alarme (1) a egalement un système de femeture de porte (14), un blocage d'alarme pendant le fonctionement du moteur (15), un telecommande (16), un système antivandaligne (17) et detection de portes et coffre (18), comptant sur un module leve-vitres (19).

Ce dispositif d'alarme (1) a une memorisation d'alarme décochée (20) une sortier pour activer cherche-personnes ou bien appeller par telephone (21) òu cas òu l'alarme soit activée et consequentement être mise en contacte avec le propietaire ou la personne au préalable fisée.

Se dispositif d'alarme (1) dispose ègalement d'un module de cristal (22), un dispositif d'auto-cheque de l'alarme et installation de la même (23) avec le but d'obvier possibles anomalies et un dicochement d'alarme (24) de caractère limité et ilimité repetitif en trois occasions selon les normes de la Communaute Economique Européenne.

Finalement il fait a jouter que le dispositif d'alarme travaille en code binaire, et pour cela il pourra être programme dans la langue de chaque pays òu il seca comercialisé, c'est à dire que le dispositif d'alarme dispose d'un systeme multibilinque.

On poura aussi employer un synthetiseur de voix pour pavoir donner des ordres verbalement et on emploiera une ampoule de mercure qui fonctionnera comme interrupteur ou senseur.

Finalement il doit être fixé que l'ensemble de l'alarme sera recavert avec une resine par immersion, qui fonctionnera isolant antihumidité.

On ne considere pas necessaire faire cetre description plus etendue pour n'importe quel experimenté dans la matiere comprenne la poursuite de l'invention et les avantages que de celle-ci derivent.

Les materiaux, foume, grandeur et disposition des elements seront susceptibles de variation si cela ne suppose pas une alteration à l'essencialité de l'invention.

Les termes dans les quels cette memoire a eté de crité de avont être pris tajours dans un sens ample et pas limitatif.

## Revendications

**1**º.-**º**Dispositif d'alarme pour véhicules automobiles et motocyclettes destines à etre incorporés dans un véhicule automobile ou motocyclette, et qui sont constitués à partir de microprocesseurs (2), circuits integres (1), transistors (3), diodes (4) et relés (5), caracterisé pour disposer d'un dispositif pour l'entrée de variables et sortier de fonctions (6), et un marquoir de consommation de courant à notables (7), ainsi que d'un dispositif de protection par contact (8), et un deuxiene dispositif de protection volumetrique par ultra-sons (9), comptant également sur in relé pour la capure d'allumage.

**2**º.- Dispositif d'alarme pour véhicules automobiles et motocyclettes selon la première revendications, caracterisé pour être doté d'un dispositif configuré comme un led de presence en surveillance (11), unesortie de commande fixe en surveillance, un dispositif de blocage de l'alarme pendant le fonctionnement du moteur (15), un dispositif pour la telecommande (16) et un dispositif de protection antivandalique.

**3**º.- Dispositif d'alarme pour vehicules automobiles et motocyclettes selon les anterieures revendications, caracterisé pour être doté d'un dispositif detecteur de l'actuation sur portes et coffres (18), un module leve - vitre (19), un dispositif memorisateur des alarmes décochées (20), un element ou dispositif par la connexion dans le même d'uncherche-personnes ou connexion telephonique similaire (21), en dispositif d'auto-chequé de l'alarme et de l'installation (23) et un programmateur de décochements (24).

**4**º.- Dispositif d'alarme pour vehicules automobiles et motocyclettes selon les anterieures reve ndications, caracterisé par etre doté d'un clavier, un ecran visualisateur avec connexions à l'alarme et un synthetiseur de voix pour l'action verbale adéquate pour plusieurs langues.

**5**º.- Dispositif d'alarme pour vehicules automobiles et motocyclettes selon les anterieures reve ndications, caracterise pour disposer d'une ampoule de mercure que fonctionne comme interrupteur ou senseur, étant recovert tou't le dispositif avec une resine par immersion que fonctionnera comme isolante antihumidité
